Europäisches Patentamt

European Patent Office

Office européen des brevets

(19)

(11) Veröffentlichungsnummer: **0 274 553**
**B1**

# (12) EUROPÄISCHE PATENTSCHRIFT

(45) Veröffentlichungstag der Patentschrift:
**13.06.90**

(21) Anmeldenummer: **87100301.8**

(22) Anmeldetag: **13.01.87**

(51) Int. Cl.⁵: **B65D 81/28**, B65D 51/16,
A23B 7/10

(54) **Verfahren zur Herstellung eines frischen Produktes aus Gemüsen, Obst u.dgl.und Verpackungsbehälter zum Durchführen des Verfahrens.**

(43) Veröffentlichungstag der Anmeldung:
**20.07.88 Patentblatt 88/29**

(45) Bekanntmachung des Hinweises auf die Patenterteilung:
**13.06.90 Patentblatt 90/24**

(84) Benannte Vertragsstaaten:
**AT BE CH DE ES FR GB IT LI LU NL SE**

(56) Entgegenhaltungen:
**EP-A- 0 023 703
EP-A- 0 174 188
DE-A- 3 131 309
DE-A- 3 233 859
FR-A- 814 793
US-A- 3 716 180**

(73) Patentinhaber: **Philipp, Thomas, Bahnhofstrasse 33,
D-2244 Wesselburen(DE)**

(72) Erfinder: **Philipp, Thomas, Bahnhofstrasse 33,
D-2244 Wesselburen(DE)**

(74) Vertreter: **Richter, Werdermann & Gerbaulet, Neuer
Wall 10, D-2000 Hamburg 36(DE)**

## Beschreibung

Die Erfindung betrifft ein Verfahren zur Herstellung eines frischen, in Kleinbehältern, insbesondere Standardgläsern, mit einem Verschlußdeckel verpackten Produktes aus Gemüsen oder Obst durch Gärung des geschnitzelten, zerkleinerten oder ganzstückigen Produktes, gegebenenfalls unter Zusatz von Milchsäurebakterien, wobei dem Rohprodukt Salz und Gewürze zugesetzt sind, in Behältern ohne Verschlußdeckelabnahme, wobei das Endprodukt nach Beendigung der Hauptgärphase in demselben Behälter verbleibend zum Verkauf gebracht wird, der für das Entweichen der bei der Gärung entstehenden Gase eine Ventilöffnung aufweist, die das Eindringen von Luft in den Gasinnenraum verhindert, und einen Verpackungsbehälter zur Durchführung des Verfahrens.

Ein derartiges Verfahren zur Herstellung eines frischen, in Behältern, insbesondere Standardgläsern, mit einem Verschlußdeckel verpackten Produktes aus Gemüsen oder Obst, durch Gärung des geschnitzelten, zerkleinerten oder ganzstückigen Produktes ist durch die DE–A 1 517 080 bekannt, die sich mit der Herstellung eines qualitativ hochwertigen Sauerkrauts mit einem hohen Vitamin-C-Gehalt befaßt. Die Sauerkrautherstellung erfolgt dabei durch Vergärung von Weißkohlschnitzeln, gegebenenfalls unter Zusatz von Milchsäurebakterien, wobei die eingesalzenen Schnitzel von der Lake getrennt in Kleingärbehälter mit Ventilverschluß bzw. in Behälter mit nur lose aufgelegtem Deckel eingefüllt, eine heterofermentative Gärung durchgeführt und die Behälter im zweiten Fall nach Beendigung der heterofermentativen Gärung verschlossen werden. Um einen hohen Vitamin-C-Gehalt zu erhalten und beizubehalten, ist es dabei erforderlich, daß das Sauerkraut zusammen mit Lake gelagert wird, da das Sauerkraut das Vitamin C verliert, wenn es ohne Lake aufbewahrt wird. Der Verlust an Vitamin C wird im wesentlichen dadurch gefördert, daß Sauerstoff beim Umfüllen des Sauerkrautes von größeren Behältern in Kleinpackungen hinzutritt und dadurch das Vitamin C in dem nicht durch Lake bedeckten Sauerkraut zerstört wird. Bei dem bekannten Verfahren wird jedoch der Sauerstoff bei der heterofermentativen Gärung durch $CO_2$ verdrängt und kann durch das geschlossene Ventil bzw. den hermetisch verschlossenen Behälter nicht mehr zu dem Sauerkraut gelangen, wodurch der Vitamin-C-Gehalt des Sauerkrautes erhalten bleibt. Nach diesem Verfahren wird somit geschnittener Weißkohl in einer wässrigen Kochsalzlösung eingesalzen und nach Abfließen- oder Abtropfenlassen der aus zugesetzter Kochsalzlösung und dem durch Osmose aus den Weißkohlzellen austretenden Zellwasser bestehenden Lake in Portionen in Kleinbehälter, wie Dosen oder Gläser, gefüllt, die ein Ventil zum Ablassen des Überdrucks aufweisen. Während der anschließenden Gärung entweichen Gärgase durch das Ventil nach außen, wobei sie während der vor allem zu Beginn der Fermentation recht heftigen Gärtätigkeit Teile der Restlake mitreißen.

Diese Laketröpfchen setzen sich an den Behälterwänden ab und bilden eine klebrige Schmutzschicht, so daß die Behälter, bevor sie zum Verkauf gelangen, gewaschen und getrocknet werden müssen, wobei auch eine Entfernung des Ventils durch Austausch eines ventillosen Deckels vorgenommen werden muß, wenn nicht als Ventil ein atmender Verschluß, z.B. Panoverschluß, verwendet wird. Derartige Verschlußdeckel mit einem atmenden Verschluß als Ventil sind so ausgebildet, daß die durch Gärung im Innenraum durch die in das Behältnis eingegebenen Produkte entstehenden Gase im Dichtungsbereich des Verschlußdeckels nach außen entweichen können, indem sich die Dichtung im Deckelrandbereich öffnet, während bei einem Nachlassen des Innendruckes dann die volle Dichtung im Deckelrandbereich erhalten wird. Hierbei hat sich jedoch gezeigt, daß der während des Gärprozesses entstehende Innendruck so groß ist, daß Flüssigkeit im Dichtungsbereich des Verschlußdeckels aus dem Behälter zusammen mit den entweichenden Gasen herausgepreßt wird, was zu Wandverschmutzungen der Behältnisse führt. In solchen Fällen sind die Behältnisse nach Beendigung des Gärprozesses zu reinigen, was sehr aufwendig und mit zusätzlichen Arbeitsgängen verbunden ist. Hinzu kommt, daß in diesem Falle nicht jedes Behältnis aus Glas verwendet werden kann; es können nur spezielle Gläser Verwendung finden, die mit einem ventilierenden Deckel verschlossen werden, also mit solchen Verschlußdeckeln, deren Randausgestaltung derart ist, daß zwischen Behälterwand und umlaufendem Verschlußdeckelrand eine ventilartige Verbindung erhalten wird. Außerdem müssen die Verschlußdeckel entsprechende spezielle konstruktive Ausgestaltungen aufweisen, damit überhaupt die ventilartige Wirkung erzielt werden kann.

Durch die DE–A 3 131 309 ist ein Sicherheitsverschluß für Flaschen bekannt, die zur Aufnahme von gärungsfähigen Flüssigkeiten, insbesondere Getränken, vorgesehen und die mit einer am Öffnungsrand des Flaschenhalses lösbar anbringbaren Verschlußkappe versehen sind, die einen die Öffnung dichtend abschließenden Deckelteil besitzt, wobei in dem Deckelteil ein durchgehendes Loch ausgebildet ist, das durch eine auf die Außenseite des Deckelteils aufgeklebte Folie geschlossen ist. Ergibt sich beim Gärungsvorgang ein Ansteigen des Innendruckes der Flasche, dann drückt das Gas im Bereich des im Deckelteil des Verschlusses gebildeten Lochs auf die Unterseite der aufgeklebten Folie. Sobald ein ausreichend hoher Gasdruck aufgebaut ist, soll die Klebeverbindung zwischen der Folie und dem Deckelteil örtlich aufgedrückt werden, so daß es zu einem örtlichen Abheben der Folie von ihrer Unterlage kommen soll, damit Kohlensäuregas entweichen kann.

Dadurch, daß das bei diesem Sicherheitsverschluß ausgebildete Ventil erst wirksam wird, wenn der Innendruck der Flasche während des Gärungsvorganges auf ein bestimmtes Maß angestiegen ist, ist nicht vermeidbar, daß entweder die Verschlußfolie bei zu hohem auftretendem Druck abgerissen und mit den entweichenden Gasen Flüssigkeit mitgerissen wird. Dagegen ist ein Entweichen des Gases bei einem geringen Innendruck der Flasche nicht möglich, weil dann der Gasdruck nicht ausreicht, um die Folie von ihrer Unterlage abzuheben. Es kann dabei zu einer Auswölbung der Folie im Bereich der Durchbrechung der Verschlußkappe kommen und erst wenn ein ausreichender Innendruck aufgebaut ist, kann es zu einem örtlichen Abheben der Folie von ihrer Unterlage kommen, damit das gebildete Gas entweichen kann. Bei diesem Sicherheitsverschluß für Flaschen ist ein Austritt von überschüssigen Gasen zusammen mit Flüssigkeit nur dann vermeidbar, wenn die mit dem Sicherheitsverschluß versehenen Flaschen aufrechtstehend transportiert und gelagert werden, d.h., wenn die Flaschen in einem Kasten oder in einem Karton stehend untergebracht sind. Diese Forderung ist insbesondere beim Transport und bei der Lagerung von Flaschen mit einem derartigen Sicherheitsverschluß nicht immer erfüllbar, weil nicht immer darauf geachtet wird und darauf geachtet werden kann, daß die Flaschen eine senkrechte Transport- oder Lagerstellung einnehmen. Dieser Sicherheitsverschluß stellt somit in keiner Weise sicher, daß bei einer nicht vorgeschriebenen senkrechten Lagerung oder einem Transport der Flaschen Gase und Flüssigkeit austreten können. Da der Gärprozeß von gärungsfähigen Flüssigkeiten mit einem sehr hohen Druckanstieg verbunden ist, ist es nicht vermeidbar, daß beim Entweichen der während des Gärprozesses entstandenen Gase aufgrund der hohen Innendruckes der Flasche Flüssigkeit mit austritt.

Nach der DE–A 1 191 215 ist ein Verfahren zur Herstellung von Sauerkraut bekannt, nach dem ein Gemisch aus gehobeltem Kraut und Salzlösung mit Milchsäure bildenden Bakterienkulturen geimpft wird. Das Verfahren selbst besteht darin, daß das Kraut und die Salzlösung vorher mindestens auf Pasteurisierungstemperaturen erhitzt und dann mit einer Kultur von nicht Gas bildenden Milchsäurebakterien geimpft werden, worauf dann das beimpfte Gemisch aus Salzlösung und gehobeltem Kraut in Behälter gefüllt wird. Diese Behälter werden dann hermetisch verschlossen, während im Innenraum eine Gärung bis zur Entstehung von mindestens 1% Milchsäure abläuft. Mit diesem Verfahren soll auch der Betrieb in großen Gärungsbehältern wirtschaftlich durchführbar sein. Dabei ist jedoch nicht vorgesehen, daß von den gesalzenen Weißkohlschnitzeln Lake abgepreßt und darauf zu Preßlingen geformte Weißkohlschnitzel in Kleinbehältnisse, die gleichzeitig als Gär- und Verkaufsbehälter dienen, verpackt werden. Nachteilig ist hierbei jedoch, daß das Kraut und die verwendete Salzlösung vorher mindestens auf Pasteurisierungstemperatur erhitzt und dann mit einer Kultur von nicht Gas bildenden Milchsäurebakterien geimpft werden, worauf dann das beimpfte Gemisch aus Salzlösung und gehobeltem Kraut in Behälter gefüllt wird und diese dann hermetisch verschlossen werden; damit der Gärungsprozeß durchgeführt werden kann.

Diese Arbeitsweise ist mit zahlreichen Arbeitsschritten verbunden und daher nicht wirtschaftlich.

Durch die DE–A 1 517 046 ist ein Verfahren zur Aufrechterhaltung der Naturreinheit und zur Verlängerung der Haltbarkeit luftdicht folienverpackten, pasteurisierten, frischen Sauerkrautes bekannt. Bei diesem Verfahren wird ein speziell ausgebildeter Metallfolienbeutel für die Unterbringung von pasteurisiertem; frischem Sauerkraut verwendet, wobei auch eine natürliche Milchsäuregärung vorgesehen ist. Die Schnitzelmasse wird zur Durchführung des Gärprozesses mit Milchsäurebakterien geimpft.

Ein gasdicht verschließbarer Folienbeutel für abgepacktes Frisch-Sauerkraut geht aus der DE–A 1 517 049 hervor.

Der hiernach verwendete Verpackungsbeutel besteht aus einer dreilagigen Verbundfolie, die sich – vom Beutelinnenraum nach außen betrachtet – aus einer leicht verschweißbaren Kunststofffolie, beispielsweise Polypropylen, einer wärmebeständigen Kunststoffolie und einer Metallfolie zusammensetzt. Die Verwendung eines derartigen Verpackungsbeutels setzt Produkte voraus, bei denen die Gärung abgeschlossen ist, da diese Beutel nicht so ausgebildet sind, daß die durch Gärung entstehenden Gase entweichen können.

Aus der DE–A 1 692 788 ist ein Verfahren zur Verlängerung der Lagerfähigkeit von Sauerkraut, insbesondere von maschinell abgepacktem Sauerkraut, bekannt.

Das Verfahren zur Haltbarmachung von Frischsauerkraut besteht darin, daß die Haltbarmachung auf kaltem Wege in der Weise erfolgt, daß das angegorene bis ausgegorene Sauerkraut einer Unter- und Überdruckbehandlung oder über- und Unterdruckbehandlung in einer einmaligen bzw. mehrmaligen unmittelbaren Wechselfolge unterworfen wird. Dem nach diesem Verfahren hergestellten Sauerkraut wird eine sterilisierte und nachfolgend mit einer sterilen Milchsäurereinkultur angereicherte Lake kalt zugesetzt.

Eine Vorrichtung zum Gären einer Gemüsemasse unter Luftabschluß mit einem Behälter, dessen offenes oberes Ende mittels einer weichen Membran verschließbar ist, ist durch die DE–A 2 112 087 bekannt. Bei dieser Vorrichtung ist eine Einrichtung zum Absaugen der Luft aus dem verschlossenen Behälter vorgesehen, während die Membran aus Kautschuk gebildet und mit einem mittels eines Ventils aufblasbaren Dichtungsstreifen verbunden ist.

Die Erfindung löst die Aufgabe, ein Verfahren der eingangs genannten Art zu schaffen, das die Herstellung derartiger Produkte in Verkaufsbehältern ermöglicht, so daß die durch Vergärung erhaltenen Produkte nach der Gärung oder auch schon während des Gärprozesses ohne weitere Behandlung zum Verkauf gelangen können, und zwar ohne Verwendung gesonderter Gär- und Verpackungsbehälter mit einem Verschlußdeckel mit Dichtrandventil, wobei gleichzeitig mit dem Verfahren die Haltbarkeit des Produktes erhöht werden soll.

Diese Aufgabe wird bei einem Verfahren der eingangs genannten Art durch die im Patentanspruch 1 gekennzeichneten Merkmale gelöst.

Des weiteren wird die Aufgabe bei einem Verpackungsbehälter zur Durchführung dieses Verfahrens durch die im Patentanspruch 2 gekennzeichneten Merkmale gelöst.

Mit diesem Verfahren ist die Herstellung von frischen Produkten aus Gemüsen, Obst u.dgl., die durch Gärung haltbar gemacht worden sind, in Standardgläsern möglich, ohne daß es hierzu großer technischer zusätzlicher Einrichtungen bedarf, um die während des Gärprozesses entstehenden Gase abzuleiten. Außerdem wird durch die erfindungsgemäße Deckelausgestaltung erreicht, daß einerseits beim Entweichen der Gase keine Flüssigkeit mitgerissen werden kann, so daß eine nachträgliche Beseitigung von behälteraußenseitig auftretenden Verschmutzungen durch austretende Flüssigkeit vermieden wird und andererseits auch keine Luft von außen in den Behälterinnenraum dringen kann. Das Verfahren ist hiernach sehr wirtschaftlich und in keiner Weise aufwendig. Es können alle Arten von Kleinbehältnissen, insbesondere Standardgläser, verwendet werden, so daß direkt verkaufsfähige Verpackungen geschaffen werden. Durch die Verwendung einer Ventilfolie wird einerseits der Austritt von Flüssigkeit mit den während des Gärprozesses entstehenden und durch die Ventilfolie entweichenden Gasen vermieden, jedoch andererseits ist ein Flüssigkeitsaustritt auch dann nicht möglich, wenn z.B. eine nicht korrekte und sachgemäße Lagerung der mit Produkten gefüllten Behältnisse erfolgt, denn die verwendete Ventilfolie ist so geschaffen, daß nur während des Gärprozesses entstehende Gase entweichen können, während Flüssigkeit selbsttätig nicht austreten kann. Mit den Gasen mitgerissene Flüssigkeit kann ebenfalls nicht austreten.

Es ist auf diese Weise ein verkaufsfertiges frisches und über einen langen Zeitraum lagerfähiges und haltbares Produkt geschaffen, da der einherlaufende Gärprozeß weder gefördert noch abgebrochen zu werden braucht. Herstellbar und abpackbar zu tafelfertigen Zubereitungen sind u.a. Sauerkraut, mildsaure Dillgurken und alle andersartigen Produkte.

Vorteilhaft ist dabei, daß die Einhaltung eines von der Behälterform und dem Behältervolumen abhängigen, jedoch für jede Behälterform und für jedes Behältervolumen bestimmbaren maximalen Quotienten zwischen eingefüllter Füllmenge und dem Behältervolumen einen ausreichenden Kopfraum in dem Behälter garantiert, wobei der Quotient gleich der Füllgrad ist, wobei durch den Kopfraum verhindert wird, daß bei einem starken Innendruck durch die Gärgase in der anfänglichen, heftigen Hauptgärphase Füllgut gegen die Ventilöffnung in dem Verschlußdeckel gepreßt wird und so mit den Gärgasen auch die am Füllgut anhaftende Flüssigkeit mittels Adhäsions- oder Kohäsions-Kräfte ausgetrieben bzw. mitgerissen wird. Die Gefahr des Mitreißens von Flüssigkeit ist im wesentlichen in der Hauptgärphase gegeben, so daß während der Hauptgärphase die gefüllten Behälter die normale Lagerposition (Verschlußdeckel nach oben) einnehmen sollten. Doch auch in der sich an die Hauptgärphase anschließenden weiteren Gärphase und auch bei einem Nachlassen des Behälterinnendruckes wird auch bei einer anderen Form der Behälterlagerung ein Austreten von Flüssigkeit, sei es durch Mitreißen austretender Gärgase oder durch Schwerkraft, aufgrund der Verschlußdeckelausgestaltung vermieden.

Im folgenden wird der Gegenstand der Erfindung in den Zeichnungen erläutert. Es zeigt

Fig. 1 in einer Seitenansicht ein mittels eines Verschlußdeckel verschlossenes Kleinbehältnis, dessen Verschlußdeckel mit einer Ventilfolie versehen ist,

Fig. 2 in einer Ansicht von oben das Kleinbehältnis mit dem Verschlußdeckel,

Fig. 3 einen senkrechten Teilschnitt gemäß Linie III-III in Fig. 2 und

Fig. 4 einen vergrößerten senkrechten Teilschnitt gemäß Fig. 3.

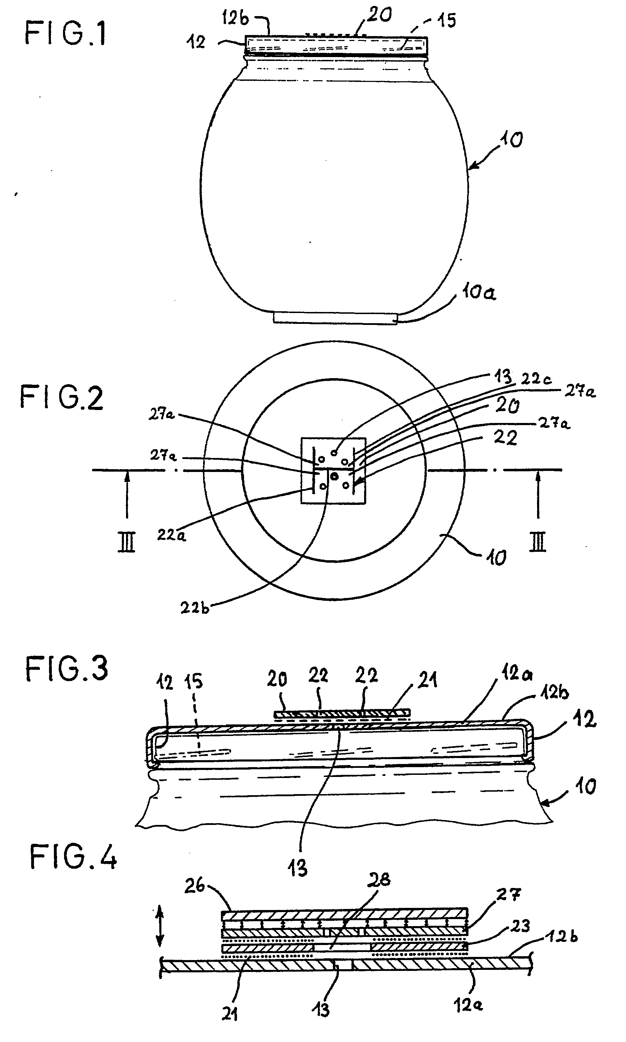

Der in Fig. 1 mit 10 bezeichnete Kleinbehälter, z.B. ein sogenanntes Tonnenglas, mit einer bodenseitigen Standfläche 10a weist im Bereich seiner oberen Öffnung einen halsartig eingezogenen, umlaufenden Rand 10b auf, der zur Herstellung eines Schraubverschlusses mit einem Außengewinde 15 versehen ist. Dieses Außengewinde kann als Rundgewinde oder als Sägegewinde ausgebildet sein. Auch ein sogenannter Kurzgewindegang kann hier zur Anwendung gelangen. Da bei geblasenen Hohlkörpern die Gewindegänge im Bereich der Trennfuge des Werkzeuges unter Umständen unsauber ausfallen und dann zu Störungen beim Aufschrauben des Verschlusses führen, wird häufig das Gewinde in halbe Gänge in der Weise geteilt, daß auf jeder Formhälfte die Gänge nur bis wenige Millimeter vor der Trennfuge ausgeführt sind. Es ist dann erforderlich, mindestens zwei besser drei Gänge anzubringen.

Das Verschließen des Behälters 10 erfolgt mittels eines Verschlußdeckels 12, der als Schraubdeckel ausgebildet ist, um auf das Außengewinde des Behälters 10 aufgeschraubt zu werden. Dieser Verschlußdeckel 12 besteht vorzugsweise aus metallischen Werkstoffen, jedoch auch andere geeignete Werkstoffe können zur Herstellung des Deckels 12 verwendet werden. Der Verschlußdeckel 12 ist mit einer Lackbeschichtung oder einer Kunststoffbeschichtung versehen, um eine Rostbildung zu vermeiden, wenn der Verschlußdeckel 12 aus Blech gefertigt ist. Hier kommen Beschichtungen zur Anwendung, die lebensmittelneutral und nicht gesundheitsschädigend sind. Die Deckelwand des Verschlußdeckels 12 ist bei 12a angedeutet und die Deckelaußenwandfläche bei 12b (Fig. 1 und 3),

In der Deckelwand 12a ist eine Durchbrechung oder sind mehrere Durchbrechungen vorgesehen, die mit 13 bezeichnet sind. Sind mehrere Durchbrechungen 13 vorgesehen, dann sind diese möglichst dicht beieinanderliegend, d.h. ohne großen Abstand voneinander, auf der Fläche der Deckelwand 12a verteilt ausgebildet, so wie dies z.B. aus Fig. 2 ersichtlich ist. Der Durchmesser einer jeden Durchbrechung 13 beträgt ebenfalls nur wenige Millimeter, jedoch richtet sich der Durchmesser der Durchbrechungen jeweils nach der Anzahl der in der Deckelwand 12a des Verschlußdeckels 12 vorgesehenen Durchbrechungen 13 und nach der Größe des Behälters.

Bei einer Vielzahl von Durchbrechungen können die einzelnen Durchbrechungen Durchmesser aufweisen, die unterhalb eines Millimeters liegen, während dagegen bei nur einer, zwei oder drei Durchbrechungen es von Vorteil ist, wenn jede Durchbrechung dann einen Durchmesser aufweist, der mindestens einen Millimeter beträgt, wobei jedoch auch kleinere Durchmesser zur Anwendung gelangen können.

Um das Austreten von während des Gärprozesses im Innenraum des Behälters entstehenden Gasen durch die Durchbrechungen 13 in dem Verschlußdeckel 12 zu gewährleisten, jedoch um gleichzeitig dabei zu verhindern, daß sich im Innenraum des Behälters 10 befindende Flüssigkeit mit austritt oder überhaupt austreten kann, ist der Verschlußdeckel 12 mit einer Ventilfolie 20 versehen. Diese Ventilfolie 20 besteht aus einem quadratischen oder kreisförmigen Zuschnitt einer Trägerfolie 23, einer Zwischenfolie 27 und einer Abdeckfolie 26, wobei alle drei Folienzuschnitte aus Kunststoffen bestehen. Die Trägerfolie 23 ist auf der der Deckelwandfläche 12b zugekehrten Seite mit einer Klebmittelbeschichtung 21 versehen, wobei es sich um solche Klebmittel handelt, die selbstklebende Eigenschaften besitzen, so daß die auf die Deckelaußenwandfläche 12a des Verschlußdeckels 12 aufgeklebte Trägerfolie 23 der Ventilfolie 20 fest und vollflächig auf dem Verschlußdeckel gehalten ist.

Die Trägerfolie 23 weist ferner etwa mittig eine kreisförmige, quadratische, rechteckförmige oder eine andere geometrische Form aufweisende Durchbrechung 28 auf, die so bemessen ist, daß bei auf den Verschlußdeckel 12 aufgeklebter Ventilfolie 20 die Durchbrechung 13 oder die Durchbrechungen 13 in dem Verschlußdeckel im Bereich dieser Durchbrechung 28 liegt.

Auf die Trägerfolie 23 ist die Zwischenfolie 27 aufgeklebt, die im Bereich der Durchbrechung 28 in der Trägerfolie 23 schlitzförmige Durchbrechungen oder andersartig ausgestaltete Durchbrechungen aufweist, die z.B. durch Ausstanzungen, mit oder ohne Materialverlust, erhalten werden. Diese schlitzförmigen Durchbrechungen, die in Fig. 2, 3 und 4 bei 22 angedeutet sind, können auch durch einfaches Einschneiden der Trägerfolie 23 erhalten werden. Bei dem in Fig. 2 gezeigten Ausführungsbeispiel weist die schlitzförmige Ausstanzung 22 die Form eines H auf.

Auf der Zwischenfolie 27 ist die Abdeckfolie 26 haftend angeordnet. Die Haftung der Abdeckfolie 26 auf der Zwischenfolie 27 erfolgt mittels einer Klebschicht, deren Klebkraft aber geringer ist als die Klebkraft der gesamten Ventilfolie 20 auf dem Verschlußdeckel 12. Die Klebkraft zwischen der Trägerfolie 23 und dem Verschlußdeckel 12 beträgt gegenüber der Klebkraft zwischen der Abdeckfolie 26 und der Zwischenfolie 27 ein Mehrfaches, z.B. das Zwei- oder Dreifache, so daß bei einem Gasaustritt bzw. einem im Innenraum des Behälters entstehenden Innendruck die Ventilfolie 20 nicht von dem Verschlußdeckelteil 12 abgehoben werden kann, sondern sich nur die Abdeckfolie 26 von der Zwischenfolie 27 abheben kann, worauf nachstehend noch näher eingegangen wird.

Im Innenraum des Behälters entstehende Gärgase treten zunächst durch die Durchbrechungen 13 in dem Verschlußdeckel 12 hindurch. Die Gärgase drücken dann weiter gegen die Ventilöffnung 22 in der Zwischenfolie 27 und öffnen das Ventil, indem die Gärgase entweder durch die schlitzförmigen Durchbrechungen 22 bzw. 22a, 22b, 22c direkt hindurchtreten (Fig.2) oder heben die die schlitzförmigen Durchbrechungen 22a, 22b, 22c begrenzenden Folienabschnitte 27a an, d.h. drücken diese gegen die Abdeckfolie 26, so daß ausreichend große Öffnungen für den Durchtritt der Gärgase geschaffen werden. Die durch die schlitzförmigen Durchbrechungen 22 hindurchtretenden Gärgase drücken gegen die auf der Zwischenfolie 27 haftende Abdeckfolie 26, ohne diese jedoch ganz abzuheben. Durch die Haftung zwischen den beiden Folien 26, 27 wird nur immer gerade so viel von der Abdeckfolie 26 abgehoben, daß durch den gebildeten Zwischenraum, d.h. kanalartigen Zwischenraum, die Gärgase ins Freie strömen können. Lediglich einzelne Abschnitte der Abdeckfolie 26 werden angehoben, damit Gärgase austreten können, während die anderen Abschnitte der Abdeckfolie 26 auf der Zwischenfolie 27 haftend verbleiben. Die feinen kapillarähnlichen Zwischenräume zwischen den beiden Folien 26, 27 werden nur durchströmt von den Gärgasen; diese Zwischenräume sind jedoch so fein und klein, daß Flüssigkeit, die von den Gärgasen mitgerissen wird, nicht hindurchtreten kann, also nicht ins Freie gelangen kann. Nur bei einer derartigen Ausgestaltung ist gewährleistet, daß zwar durch den Gärprozeß im Innenraum des Behältnisses entstehende Gase entweichen können, jedoch keine Flüssigkeit austreten oder mit den entweichenden Gasen mitgerissen werden kann. Gase, die im Innenraum des Behältnisses entstehen, strömen zunächst durch die Durchbrechung 13 bzw. die Durchbrechungen 13 in dem Verschlußdeckel 12 und durch die schlitzförmigen Durchbrechungen 22 in der Zwischenfolie 27 hindurch. Die durch die Durchbrechungen 22 hindurchtretenden Gase finden zunächst einmal einen Widerstand an der Abdeckfolie 26, der jedoch nicht so groß ist, daß sich die Gase einen Weg zu den Öffnungen 22 in der Ventilfolie 20 bahnen können. Da die Gase unter Druck austreten, reicht dieser Druck aus, um in denjenigen Bereichen die Abdeckfolie 26 von der Zwischenfolie 27 abzuheben, in denen die Gase versuchen, durch die Haftschicht zwischen den beiden Folie zu gelangen. In diesen Bereichen werden kleine Abschnitte der Abdeckfolie 26 von der Zwischenfolie 27 abgehoben bzw. durch die strömenden Gase angehoben, jedoch aufgrund der Konsistenz des verwendeten Klebmittels und der gegebenen Adhäsionskräfte zwischen den beiden Folien 26, 27 bzw. der bestehenden Haftkräfte zwischen den Folien 26, 27 ist die Abdeckfolie 26 bestrebt, sich wieder in ihren angehobenen Bereichen auf die Zwischenfolie 27 zu legen und an dieser anzuhaften. Dadurch ist die Möglichkeit gegeben, daß zwar durch den Gärprozeß entstehende Gase durch die Durchbrechung 13 in dem Verschlußdeckel 12 durch die Durchbrechungen 22 strömen können, um von dort dann zwischen den beiden Folien 26, 27 hindurchströmend ins Freie austreten zu können. Die durch die Ventilfolie 20 gegebene Durchlässigkeit ist so bemessen, daß hier nur Gase hindurchtreten können, jedoch keine Flüssigkeit, so daß ein flüssigkeitsdichter Verschluß erhalten wird, der es trotzdem ermöglicht, daß die während des Gärprozesses entstehenden Gase entweichen können.

Durch entsprechende Materialauswahl der beiden Folien 26, 27 kann auch eine ausreichende Haftung zwischen beiden Folien 26, 27 erreicht werden. Die Trägerfolie 23 weist gegenüber den beiden anderen Folien 26, 27 eine größere Stärke und Eigensteifigkeit auf. Die Zwischenfolie 27 ist in dünner Stärke ausgeführt.

Eine derart ausgebildete Deckelausgestaltung ist wirtschaftlich, da somit verkaufsfertige Verpackungen geschaffen werden, die stapelbar und lagerfähig sind, und zwar auch noch während eines ablaufenden Gärprozesses, ohne daß es zu einem Flüssigkeitsaustritt kommen kann. Die Verwendung der Ventilfolie 26 erbringt den Vorteil, daß der Verschlußdeckel seine volle ebene Fläche behält und als Abstellfläche dient, wenn mehrere Behältnisse übereinandergestapelt werden, was bei der Verwendung von aus der Deckelebene herausragenden Ventilen nicht möglich ist.

## Patentansprüche

1. Verfahren zur Herstellung eines frischen, in Kleinbehältern, insbesondere in Standardgläsern, mit einem Verschlußdeckel verpackten Produktes aus Gemüsen oder Obst durch Gärung des geschnitzelten, verkleinerten oder ganzstückigen Produktes, gegebenenfalls unter Zusatz von Milchsäurebakterien, wobei dem Rohprodukt Salz und Gewürz zugesetzt sind, in Behältern (10) ohne Verschlußdeckelabnahme, wobei das Endprodukt nach Beendigung der Hauptgärphase in dem gleichen Behälter (10) verbleibend zum Verkauf gebracht wird, der für das Entweichen der bei der Gärung entstehenden Gase eine Ventilöffnung aufweist, die das Eindringen von Luft in den Gasinnenraum verhindert, dadurch gekennzeichnet, daß das geschnitzelte, zerkleinerte oder ganzstückige Produkt in dem Behälter (10) mit einem Verschlußdeckel (12) ohne ventilierenden oder atmenden Randdichtungsbereich eingefüllt, unter Einhaltung eines von der Form und dem Volumen des Behälters (10) abhängigen, jedoch für jede Behälterform und -volumen bestimmbaren, maximalen Quotienten zwischen eingefüllter Füllgutmenge und Behältervolumen ausreichender Kopfraum zur Verhinderung, daß Füllgut bei einem starken Innendruck durch Gärgase in der anfänglichen, heftigen Hauptgärphase gegen die in dem Behälterverschlußdeckel (12) ausgebildete Ventilöffnung (13) gepreßt und so mit den Gärgasen auf die am Füllgut anhaftende Flüssigkeit ausgetrieben oder mitgerissen wird, wobei für das Entweichen der bei der Gärung entstehenden Gase der Behälterverschlußdeckel (12) mit mindestens einer, kleine Abmessungen aufweisenden Durchbrechung (13) als Ventilöffnung versehen ist, die deckelwandaußenseitig mittels einer selbstklebenden, vollflächig auf der Deckelaußenwandfläche (12a) anliegenden Ventilfolie (20) abgedeckt ist, die schlitzförmige oder andersartig ausgestaltete in Deckung mit den Durchbrechungen (13) in dem Verschlußdeckel (12) stehende und mittels einer Abdeckfolie (26) abgedeckte Durchbrechungen (22) in Form von Ausstanzungen aufweist, so daß die aus dem Behälterinnenraum durch die Behälterdeckeldurchbrechung (13) entweichenden Gase durch die Ventilfoliendurchbrechung (22) hindurchtreten und zwischen der die Durchbrechungen (22) enthaltenden Ventilfolie (20) und der diese abdeckenden Abdeckfolie (26) durch selbsttätige Ausbildung von Strömungskanälen durch abschnittsweises Abheben der Abdeckfolie (26) von der die Durchbrechungen (22) enthaltenden Ventilfolie (20) ins Freie strömen und das Eindringen von Luft in den Behälterinnenraum verhindert wird, wobei auch nach Abschluß der heftigen Hauptgärphase und bei einem Nachlassen des Behälterinnendruckes auch bei jeder anderen Form der Lagerung oder bei einer während des Transportes erfolgenden Lageveränderung der gefüllten Behälter das Austreten von Flüssigkeit aus dem Behälter vermieden wird.

2. Verpackungsbehälter zur Durchführung des Verfahrens nach Anspruch 1, bestehend aus einem Behälter (10) aus Glas oder einem anderen geeigneten Werkstoff mit insbesondere einem im oberen Öffnungsbereich ausgebildeten halsartig eingezogenen Rand (10b) mit außenwandseitig ausgebildetem Gewinde (15) zur Aufnahme eines Verschlußdeckels (12), dadurch gekennzeichnet, daß der Verschlußdeckel (12) in seiner oberen Deckelwand (12a) eine Durchbrechung (13) oder mehrere, dicht nebeneinander liegend angeordnete Durchbrechungen (13) aufweist, von denen jede Durchbrechung (13) mit kleinsten Abmessungen versehen ist, und auf seiner Verschlußdeckelaußenwandfläche (12b) der Verschlußdeckelwand (12a) eine die Durchbrechung bzw. die Durchbrechungen (13) abdeckende, selbstklebende, aus einer Trägerfolie (23), einer eine Ventilöffnung (22) aufweisenden Zwischenfolie (27) und einer auf dieser vermittels Adhäsionskräfte haftenden Abdeckfolie (26) bestehende Ventilfolie (20) aufweist, deren mit einer im Bereich der Durchbrechung (13) oder der Durchbrechungen in dem Verschlußdeckel (12) liegenden Durchbrechung (28) versehenen Trägerfolie (23) vollflächig mittels einer Klebemittelschicht (21) auf der Verschlußdeckelwandfläche (12b) gehalten ist und deren Zwischenfolie (27) als Ventilöffnung schlitzförmige Durchbrechungen (22) in Form von Ausstanzungen oder andersartig ausgebildete Durchbrechungen (22) aufweist, die durch Materialentfernung, durch Einschneiden od.dgl. erhalten werden, wobei die Anordnung der schlitzförmigen Durchbrechungen (22) der Zwischenfolie (27) zu der Durchbrechung bzw. zu den Durchbrechungen (13) in dem Verschlußdeckel (12) derart ist, daß die Durchbrechung bzw. die Durchbrechungen (13) in dem Verschlußdeckel (12) und die Durchbrechung (28) in der Trägerfolie (23) und die schlitzförmige Durchbrechung (22) in der Zwischenfolie (27) übereinanderliegend sind bzw. miteinander fluchten, wobei die Abdeckfolie (26) vollflächig auf der Oberfläche der Zwischenfolie (27) mittels geringer Haftkraft gehalten ist, so daß im Innenraum des Behälters (10) durch Produktgärung entstandene Gase durch die Durchbrechung bzw. Durchbrechungen (13) in dem Verschlußdeckel (12) und durch die im Bereich der Durchbrechung (28) der Trägerfolie (23) liegenden schlitzförmigen Durchbrechungen (22) in der Zwischenfolie (27) hindurchtreten und zwischen der Zwischenfolie (27) und der auf dieser leicht haftend gehaltenen Abdeckfolie (26) durch Ausbildung von Strömungswegen durch abschnittsweises Abheben der Abdeckfolie (26) von der Zwischenfolie (27) ins Freie strömen, wobei im Umfeldbereich der Durchbrechung bzw. der Durchbrechungen (13) in dem Verschlußdeckel (12) die Trägerfolie (23) der Ventilfolie (20) vollflächig aufgeklebt ist.

3. Verpackungsbehälter nach Anspruch 2, dadurch gekennzeichnet, daß als Ventilöffnung (22) in der Zwischenfolie (27) eine Ausstanzung in H-Form vorgesehen ist.

4. Verpackungsbehälter nach Anspruch 2 und 3, dadurch gekennzeichnet, daß die Durchbrechung (28) in der Trägerfolie kreisförmig, quadratisch, rechteckförmig ist oder eine andere geometrische Form aufweist.

5. Verpackungsbehälter nach Anspruch 2 bis 4, dadurch gekennzeichnet, daß die Haftkraft zwischen der Trägerfolie (23) und der Verschlußdeckeloberfläche (12b) einem Mehrfachen der Haftkraft zwischen der Abdeckfolie (26) und der Zwischenfolie (27) vorzugsweise dem Doppelten oder Dreifachen entspricht.

**Revendications**

1. Procédé pour la préparation d'un produit frais composé de fruits ou légumes, emballé dans des petits récipients, en particulier dans des bocaux standard, avec un couvercle, par fermentation du produit découpé, réduit en petits morceaux ou entier, le cas échéant en ajoutant des bactéries d'acide lactique, du sel et des épices étant ajoutés au produit brut, dans des récipients (10) sans enlever le couvercle, le produit final étant mis en vente, une fois la phase principale de fermentation terminée, en restant dans le même récipient (10) qui présente une ouver ture de ventilation, pour l'échappement des gaz issus de la fermentation, qui empêche que de l'air ne pénètre, dans l'espace intérieur à gaz, caractérisé en ce que le produit découpé, réduit en petits morceaux ou entier est versé dans le récipient (10) avec un couvercle (12) sans zone d'étanchéité marginale qui respire ou qui ventile, en respectant un quotient maximum entre la quantité de produit de remplissage rempli et le volume du récipient pour un espace de tête, dépendant de la forme et du volume du récipient (10) mais pouvant cependant être déterminé pour toute forme de récipient et tout volume de récipient, pour empêcher que du produit de remplissage ne soit pressé, lors d'une forte pression intérieure dûe aux gaz de fermentation pendant la phase vive initiale et principale de la fermentation, contre l'ouverture de ventilation (13) ménagée dans le couvercle du récipient (12) et que le liquide adhérant au produit de remplissage soit ainsi également expulsé ou entraîné avec les gaz de fermentation; le couvercle du récipient (12) étant pourvu, pour l'échappement des gaz issus de la fermentation, d'au moins une découpure (13) présentant de petites dimensions comme ouverture de ventilation qui est recouverte, sur la face extérieure de la paroi du couvercle, d'une feuille de ventilation (20) autocollante, adhérant sur toute la surface de la surface de la paroi extérieure du couvercle (12a) qui présente des découpures (22) sous feille de poinçonnages, en forme de fentes ou configurées d'une autre manière, coïncidant avec les découpures (13) du couvercle (12) et recouvertes par une feuille de couverture (26) si bien que les gaz qui s'échappent de l'intérieur du récipient par la découpure du couvercle du récipient (13) traversent la découpure de ventilation (22) et s'échappent à l'air libre entre la feuille de ventilation (20) qui contient les découpures (22) et la feuille de couverture (26) qui les recouvre, en formant automatiquement des canaux d'écoulement en soulevant par sections la feuille de recouvrement (26) de la feuille de ventilation (20) contenant les découpures et que la pénétration d'air à l'intérieur du récipient est évitée, la sortie de liquide hors du récipient étant également évitée, une fois la phase vive et principale de fermentation terminée et en cas de baisse de la pression intérieure du récipient, même pour toute autre forme de stockage ou pour un changement de position des récipients pleins survenu lors du transport.

2. Emballage pour la réalisation du procédé selon la revendication 1, constitué par un récipient (10) en verre ou en un autre matériau approprié avec en particulier un bord rentré (10b) à la façon d'un col, configuré dans la portion supérieure d'ouverture, avec un filet (15) formé sur la face de la paroi extérieure pour le logement d'un couvercle (12), caractérisé en ce que le couvercle (12) présente dans sa paroi supérieure de couvercle (12a) une découpure (13) ou plusieurs découpures (13) placées très près l'une à côté de l'autre, chaque découpure (13) ayant des dimensions minimes et qu'il présente, sur la surface de la paroi extérieure du couvercle (12b) de la paroi du couvercle (12a), une feuille de ventilation (20) autocollante, qui recouvre la découpure ou les découpures (13), constituée par une feuille de support (23), une feuille intermédiaire (27) présentant une ouverture de ventilation (22) et une feuille de couverture (26) adhérant à celle-ci au moyen de forces d'adhérence, feuille de ventilation dont la feuille de support (23) pourvue d'une découpure (28) située dans la zone de la découpure (13) ou des découpures dans le couvercle (12) est maintenue sur toute sa surface sur la surface de la paroi du couvercle (12b) au moyen d'une couche de substance adhésive (21) et dont la feuille intermédiaire (27), en tant qu'ouverture de ventilation, présente des découpures (22) en forme de fentes sous forme de poinçonnages ou de découpures (22) configurées d'une autre manière, que l'on obtient en enlevant de la matière, en faisant des incisions ou de manière similaire, la disposition des découpures en forme de fentes (22) de la feuille intermédiaire (27) par rapport à la découpure ou aux découpures (13) du couvercle (12) étant telle que la découpure ou les découpures (13) dans le couvercle (12), la découpure (28) dans la feuille de support (23) et la découpure en forme de fente (22) dans la feuille intermédiaire (27) sont superposées ou sont aligneés l'une sur l'autre, la feuille de couverture (26) étant maintenue sur toute sa surface sur la surface de la feuille intermédiaire (27) par une force d'adhérence moindre, si bien que les gaz produits à l'intérieur du récipient (10) par la fermentation du produit traversent la découpure ou les découpures (13) du couvercle (12) et les découpures en forme de fentes (22) dans la feuille intermédiaire (27) situées dans la zone de la découpure (28) de la feuille de support (23) et qu'ils s'échappent à l'air libre entre la feuille intermédiaire (27) et la feuille de couverture (26) maintenue légèrement adhérante à celle-ci, en formant des voies d'écoulement en soulevant par sections la feuille de couverture (26) de la feuille intermédiaire (27), la feuille de support (23) de la feuille de ventilation (20) étant collée sur toute sa surface dans la zone périphérique de la découpure ou des découpures (13) dans le couvercle (12).

3. Emballage selon la revendication 2, caractérisé en ce qu'un poinçonnage en forme de H est prévu comme ouverture de ventilation (22) dans la feuille intermédiaire (27).

4. Emballage selon les revendications 2 et 3, caractérisé en ce que la découpure (28) dans la feuille de support est de forme circulaire, carrée, rectangulaire ou qu'elle présente une autre forme géométrique.

5. Emballage selon les revendications 2 à 4, caractérisé en ce que la force d'adhérence entre la feuille de support (23) et la surface du couvercle (12b) soit un multiple de la force d'adhérence entre la feuille de couverture (26) et la feuille intermédiaire (27) et de préférence le double ou le triple de celle-ci.

## Claims

1. Method of manufacturing a fresh product of vegetables or fruits packed in small containers fitted with a closure, more particularly in standard jars, by fermenting the shredded, chopped up or whole product, if necessary, with the addition of lactic acid bacteria, salt and herbs or spices being added to the raw product, in containers (10) without the closure being removed, in which method, subsequent to the termination of the main fermentation phase, the product is sold while remaining in the same container (10) which is provided with a valve aperture allowing the escape of the gases produced during the fermentation which prevents the penetration of air into the gas-filled interior characterized in that the shredded, chopped up or whole product is filled into the container (10) fitted with a closure (12) without a ventilating or breathing marginal sealing area while maintaining a maximum quotient which depends on the configuration and volume of the container (10), but which can be determined for each container shape; and volume between the volume of the filled-in contents and the container volume for an adequate top end space, so as to prevent that the contents, during the initial violent main fermentation phase, are, by strong internal pressure caused by fermentation gases, urged against the valve aperture (13) constructed in the container closure (12) and thus are expelled together with or entrained by the fermentation gases on to the liquid adhering to the contents, in which, for the escape of the gases produced during the fermentation, the container closure (12) is provided with at least one small-dimensioned perforation (13) as valve aperture which, on the outside of the closure wall, is covered over its entire surface area on the outer closure wall area (12a) by means of a valve film (20), which is provided with slot-shaped or otherwise configured perforations (22) in the form of punched-out portions coinciding with the perforations (13) in the closure (12) and covered by means of a cover film (26), so that the gases escaping from the container interior through the container closure perforation (13) pass through the valve film perforation (22) and flow into the open between the valve film (20) comprising the perforations (22) and the cover film (26) covering the latter by the automatic formation of flow channels by sectionwise raising the cover film (26) from the valve film (20) comprising the perforations (22), whereby the, penetration of air into the container interior is prevented, as a result of which also after the termination of the violent main fermentation phase and when the internal container pressure abates also in the case of any other form of storage or when a change in the position of the filled containers occurs during transport, the escape of liquid from the container is prevented.

2. Packing container for performing the method according to the Claim 1, consisting of a container (10) of glass or of some other suitable material with in particular a neck-like drawn-in rim (10b) constructed within the upper opening area with a thread (15) cut on the outer wall for receiving a closure (12), characterized in that the closure (12), in its upper closure wall (12a), is provided with a perforation (13) or with several perforations (13) in close side-by-side arrangement, of which each perforation (13) is of the smallest dimensions and, on its closure outer wall area (12b) of the closure wall (12a), is provided with an adhesive valve film (20) covering the perforation(s) (13) consisting of a supporting film (23), an intermediate film (27) having a valve aperture (22) and a cover film (26) adhering with the aid of adhesive forces, the supporting film (23) of which is provided with a perforation (28) located within the area of the perforation(s) (13) in the closure (12), is retained with its entire surface area by means of a layer of adhesive agent (21) on the closure wall area (12b), and the intermediate film (27) of which, as valve aperture, is provided with slotlike perforations (22) having the form of punched-out portions or which are otherwise constructed, which are obtained by the removal of material, by incision, etc., the arrangement of the slot-like perforations (22) of the intermediate film (27) relative to the perforation(s) (13) in the closure being such that the perforation(s) (13) in the closure (12) and the perforation (28) in the supporting film (23) and the slotlike perforation (22) in the intermediate film (27) are superjacent or in alignment with each other, the cover film (26), with its entire surface area, being re-

tained on the surface of the intermediate film (27) by means of a slight adhesive force so that, in the interior of the container (10), gases produced by the fermentation of the product pass through the perforation(s) in the closure (12) and through the slotlike perforations (22) located within the area of the perforation (28) of the supporting film (23) in the intermediate film (27) and flow into the open between the intermediate film (27) and the cover film (26) retained slightly adheringly on the latter by the formation of flow paths by the sectionwise raising of the cover film (26) from the intermediate film (27), while within the surrounding area of the perforation(s) (13) in the closure (12), the supporting film (23) of the valve film (20) adheres with its entire surface area.

3. Packing container according to the Claim 2, characterized in that, in the intermediate film (27), an H-shaped punched-out portion is provided as valve aperture (22).

4. Packing container according to Claims 2 and 3, characterized in that the perforation (28) in the supporting film is circular, square, rectangular or possesses some other geometric form.

5. Packing container according to the Claims 2 to 4, characterized in that the adhesive force between the supporting film (23) and the closure surface area (12b) corresponds to a multiple of the adhesive force between the cover film (26) and the intermediate film (27), by preference to the double or treble thereof.

EP 0 274 553 B1

FIG.1

FIG.2

FIG.3

FIG.4